# EUROPÄISCHE PATENTSCHRIFT

(11) **EP 3 959 379 B1**
(45) Veröffentlichungstag und Bekanntmachung des Hinweises auf die Patenterteilung: **24.12.2025**
(21) Anmeldenummer: 20715819.7
(22) Anmeldetag: 27.03.2020
(51) Int. Cl.: E01B 29/00, E01B 31/00, B61D 3/20, B61D 15/02, B25J 9/00, B25J 21/00

(54) **BEARBEITUNGSANLAGE UND VERFAHREN ZUM DURCHFÜHREN VON GLEISARBEITEN**
PROCESSING UNIT AND METHOD FOR CARRYING OUT TRACK WORK
INSTALLATION D'USINAGE ET PROCÉDÉ DE RÉALISATION DE TRAVAUX SUR LES VOIES

(30) Priorität: 23.04.2019 DE 102019205764
(43) Veröffentlichungstag der Anmeldung: 02.03.2022
(73) Patentinhaber: Robel Bahnbaumaschinen GmbH, 83395 Freilassing (DE)
(72) Erfinder: SCHMID, Gregor, 83404 Ainring (DE)
(74) Vertreter: Rau, Schneck & Hübner Patentanwälte Rechtsanwälte PartGmbB
(86) Internationale Anmeldenummer: PCT/EP2020/058746
(87) Internationale Veröffentlichungsnummer: WO 2020/216576

(56) Entgegenhaltungen:
- EP-A1- 3 263 768
- AU-A1- 2017 204 414
- JP-A- 2019 012 394
- US-A1- 2002 170 884

## Beschreibung

Die Erfindung betrifft eine Bearbeitungsanlage und ein Verfahren zum Durchführen von Gleisarbeiten.

Aus der DE 10 2016 000 408 A1 ist ein Instandhaltungsfahrzeug bekannt, das zur Durchführung von Gleisarbeiten einen Industrieroboter mit mindestens drei Bewegungsachsen aufweist. Der Industrieroboter ist verschiebbar an einer Roboterführung gelagert, die an dem Fahrzeugrahmen des Instandhaltungsfahrzeugs befestigt ist. Der Industrieroboter ist zwischen Seitenwänden des Instandhaltungsfahrzeugs angeordnet, die einen Arbeitsraum zur Durchführung der Gleisarbeiten begrenzen.

Aus der AU 2017 204 414 A1 (entspricht EP 3 263 768 A1) ist ein Arbeitszug zur Herstellung eines Gleises bekannt. Der Arbeitszug umfasst ein Arbeitsfahrzeug mit einem Arbeitsabteil, in dem ein Mehrachsroboter angeordnet ist.

Aus der US 2002/0170884 A1 ist ein Mehrwegefahrzeug mit einem Behälter und einer Bearbeitungsanlage zum Durchführen von Schweißarbeiten bekannt. Die Bearbeitungsanlage umfasst einen Mehrachsroboter, der zwischen einer in dem Behälter befindlichen Transportposition und einer außerhalb des Behälters befindlichen Arbeitsposition verlagerbar ist.

Aus der JP 2019/012394 A ist eine Erkennungseinrichtung für Hindernisse bekannt, die an einem Baufahrzeug befestigt ist. Mit der Erkennungseinrichtung wird eine Fahrbewegung des Baufahrzeugs überwacht, sodass Unfälle mit Arbeitern vermieden werden. Ein Überwachungsbereich der Erkennungseinrichtung entspricht der Breite des Baufahrzeugs, da das Baufahrzeug nicht unnötig gestoppt werden soll, wenn sich Arbeiter nicht in dem Fahrbereich des Baufahrzeugs aufhalten.

Der Erfindung liegt die Aufgabe zugrunde, eine Bearbeitungsanlage zum Durchführen von Gleisarbeiten zu schaffen, die einfach, flexibel, sicher und zuverlässig einsetzbar ist.

Diese Aufgabe wird durch eine Bearbeitungsanlage mit den Merkmalen des Anspruchs 1 gelöst. Zum automatisierten Durchführen von Gleisarbeiten weist die Bearbeitungsanlage einen Mehrachs-Roboter auf. Der Mehrachs-Roboter ist beispielsweise als Industrieroboter ausgebildet. In einer Transportposition ist der Mehrachs-Roboter innerhalb eines Behälters angeordnet, wohingegen der Mehrachs-Roboter in einer Arbeitsposition außerhalb des Behälters angeordnet ist. Der Behälter ist als Container ausgebildet, insbesondere als Standard-Container bzw. ISO-Container. Der Behälter ist insbesondere aus Metall ausgebildet. Zum Verlagern des Mehrachs-Roboters zwischen der Transportposition und der Arbeitsposition umfasst die Bearbeitungsanlage eine Verlagerungseinrichtung.

In der Transportposition ist der Mehrachs-Roboter und insbesondere auch die Verlagerungseinrichtung innerhalb des Behälters angeordnet, so dass die Bearbeitungsanlage als Behälter in Erscheinung tritt und die Abmessungen des Behälters hat. Die Bearbeitungsanlage kann somit einfach, flexibel, sicher und zuverlässig zum Ort der Gleisarbeiten bzw. zu einem Einsatzort transportiert werden. Hierzu wird die Bearbeitungsanlage beispielsweise wie ein üblicher Standard-Container an einem Fahrzeug, beispielsweise einem Schienenfahrzeug oder einem Straßenfahrzeug, oder an einem Güterwagen bzw. Güteranhänger befestigt. Während des Transports ist der Mehrachs-Roboter innerhalb des Behälters vor Umwelteinflüssen geschützt.

Am Einsatzort wird der Mehrachs-Roboter mittels der Verlagerungseinrichtung von der Transportposition in die Arbeitsposition außerhalb des Behälters überführt. **In** der Arbeitsposition kann der Mehrachs-Roboter in einfacher, flexibler und zuverlässiger Weise unterschiedlichste Gleisarbeiten durchführen. Der Mehrachs-Roboter kann beispielsweise Instandhaltungsarbeiten und/oder Wartungsarbeiten an der Gleisanlage durchführen. Die Bearbeitungsanlage kann hierzu beispielsweise auf dem Fahrzeug oder dem Güterwagen bzw. Güteranhänger verbleiben oder abgeladen und am Einsatzort ortsfest abgestellt werden. Müssen die Gleisarbeiten unterbrochen werden, so kann der Mehrachs-Roboter jederzeit mittels der Verlagerungseinrichtung von der Arbeitsposition wieder in die Transportposition innerhalb des Behälters überführt werden, so dass sich die Bearbeitungsanlag ein einem gesicherten Zustand befindet. Nach Abschluss der Gleisarbeiten wird der Mehrachs-Roboter mittels der Verlagerungseinrichtung wieder in die Transportposition überführt und von dem Einsatzort abtransportiert.

Die Verlagerungseinrichtung ist vorzugsweise an dem Behälter befestigt. Die Verlagerungseinrichtung ist insbesondere in einem Innenraum des Behälters an diesem befestigt. **In** der Transportposition ist die Verlagerungseinrichtung vorzugsweise innerhalb des Behälters angeordnet, wohingegen die Verlagerungseinrichtung in der Arbeitsposition teilweise innerhalb und teilweise außerhalb des Behälters angeordnet ist. Der Mehrachs-Roboter ist an der Verlagerungseinrichtung befestigt. Der Mehrachs-Roboter ist beispielsweise in einer horizontalen oder einer vertikalen Position an der Verlagerungseinrichtung befestigt. Der Mehrachs-Roboter ist beispielsweise stehend oder hängend befestigt. Vorzugsweise weist der Mehrachs-Roboter mindestens drei, insbesondere mindestens vier, insbesondere mindestens fünf und insbesondere mindestens sechs Bewegungsachsen auf. Der Mehrachs-Roboter weist insbesondere mindestens drei Bewegungsachsen und höchstens sechs Bewegungsachsen auf. Die Bewegungsachsen sind insbesondere als Schwenkachsen ausgebildet.

Der Mehrachs-Roboter ist an dem Montageelement befestigt. Das Montageelement ist relativ zu dem Behälter verlagerbar, so dass der Mehrachs-Roboter in einfacher und flexibler Weise zwischen der Transportposition und der Arbeitsposition verlagerbar ist. Das Montageelement ist vorzugsweise linear verlagerbar und/oder um eine Schwenkachse verschwenkbar.

Das Montageelement ist als quaderförmiger Rahmen ausgebildet. Der quaderförmige Rahmen ist beispielsweise durch Längsstreben, Querstreben und Vertikalstreben gitterartig ausgebildet. Das Montageelement definiert einen Arbeitsraum, in dem der mindestens eine Mehrachs-Roboter angeordnet ist. Der mindestens eine Mehrachs-Roboter ist insbesondere hängend in dem Arbeitsraum angeordnet. Vorzugsweise definiert das Montageelement eine parallel zu der Oberseite und/oder zu der Unterseite des Behälters verlaufende Montageebene, wobei eine erste Bewegungsachse des Mehrachs-Roboters senkrecht zu der Montageebene verläuft.

Die mindestens eine Verlagerungseinrichtung umfasst das Montageelement, an dem der mindestens eine Mehrachs-Roboter angeordnet ist. Das mindestens eine Abstützelement dient zum Abstützen des Montageelements an dem Gleis. **In** einer Arbeitsposition ist das Montageelement mittels einer Linearführung aus dem Behälter verlagert. Ein erstes Ende des Montageelements hängt in der Arbeitsposition frei, wohingegen ein gegenüberliegendes zweites Ende in der Linearführung gehalten ist. Das mindestens eine Abstützelement dient zum Abstützen des freien Endes des Montageelements an dem Gleis. Das mindestens eine Abstützelement ist relativ zu dem Montageelement verlagerbar, insbesondere linear verlagerbar. Hierdurch kann das mindestens eine Abstützelement von einer kompakten Transportposition innerhalb des Behälters in eine Arbeitsposition zum Abstüzen des Montageelements überführt werden. Vorzugsweise umfasst die mindestens eine Verlagerungseinrichtung zwei Abstützelemente, die das Montageelement im Bereich der Schienen abstützen. Das mindestens eine Abstützelement umfasst insbesondere eine Führungsrolle zum Abstützen des Montageelements an einer Schiene während des Verlagerns des Montageelements zwischen der Transportposition und der Arbeitsposition. Das jeweilige Abstützelement ist vorzugsweise mittels eines Antriebs verlagerbar. Das mindestens eine Abstützelement stabilisiert die Verlagerungseinrichtung in der Arbeitsposition, sodass der mindestens eine Mehrachs- Roboter die Gleisarbeiten schwingungsfrei bzw. vibrationsfrei durchführen kann.

Die Bearbeitungsanlage kann einen Behälter oder mehrere Behälter umfassen. Hierdurch ist ein modularer Aufbau der Bearbeitungsanlage möglich. Die Verlagerungseinrichtung und der Mehrachs-Roboter sind insbesondere in einem ersten Behälter angeordnet, wohingegen zusätzliche Komponenten in dem ersten Behälter und/oder einem zweiten Behälter angeordnet sein können. Beispielsweise sind die Verlagerungseinrichtung und der Mehrachs-Roboter in einem ersten Behälter und eine Energieversorgung in einem zweiten Behälter angeordnet. Vorzugsweise weisen sämtliche Behälter Abmessungen und/oder Schnittstellen nach einem Standard auf, insbesondere nach ISO-Norm.

Die Bearbeitungsanlage umfasst mindestens einen Mehrachs-Roboter. Beispielsweise umfasst die Bearbeitungsanlage mindestens zwei, insbesondere mindestens drei Mehrachs-Roboter. Weiterhin weist die Bearbeitungsanlage mindestens eine Verlagerungseinrichtung zum Verlagern des mindestens einen Mehrachs-Roboters zwischen der Transportposition und der Arbeitsposition auf. Weist die Bearbeitungsanlage mehrere Mehrachs-Roboter auf, so können diese an einer gemeinsamen Verlagerungseinrichtung angeordnet sein oder jeweils an einer Verlagerungseinrichtung angeordnet sein. Vorzugsweise ist jeder Mehrachs-Roboter an einer jeweils zugehörigen Verlagerungseinrichtung, also einer eigenen Verlagerungseinrichtung angeordnet. Weist die Bearbeitungsanlage mehrere Mehrachs-Roboter auf, so sind diese in der Transportposition vorzugsweise in einem gemeinsamen Behälter angeordnet. Die Mehrachs-Roboter und/oder die Verlagerungseinrichtungen können gleich und/oder unterschiedlich aufgebaut sein.

Die Bearbeitungsanlage kann beispielsweise einen ersten Mehrachs-Roboter, der an einer ersten Verlagerungseinrichtung angeordnet ist, und einen zweiten Mehrachs-Roboter, der an einer zweiten Verlagerungseinrichtung angeordnet ist, umfassen. Der Behälter umfasst eine erste Behälteröffnung zum Durchführen des ersten Mehrachs-Roboters und eine zweite Behälteröffnung zum Durchführen des zweiten Mehrachs-Roboters. Die Behälteröffnungen sind vorzugsweise an unterschiedlichen Seiten des Behälters ausgebildet.

Eine Bearbeitungsanlage nach Anspruch 2 gewährleistet ein einfaches, flexibles, sicheres und zuverlässiges Durchführen von Gleisarbeiten. Die mindestens eine Behälteröffnung ermöglicht ein einfaches Verlagern des Mehrachs-Roboters zwischen der Transportposition und der Arbeitsposition. Der Behälter begrenzt einen Innenraum und trennt diesen von einem Außenraum ab. Die mindestens eine Behälteröffnung stellt eine Verbindung zwischen dem Innenraum und dem Außenraum her, so dass der Mehrachs-Roboter in einfacher Weise zwischen dem Innenraum und dem Außenraum verlagerbar ist. Die mindestens eine Behälteröffnung kann beispielsweise mittels eines zugehörigen Abdeckelements je nach Bedarf geöffnet oder geschlossen werden und/oder dauerhaft offen sein. Vorzugsweise weist der Behälter zwei einander gegenüberliegende lange Seiten, zwei einander gegenüberliegende kurze Seiten, eine Unterseite und eine gegenüberliegende Oberseite auf. Vorzugsweise ist die mindestens eine Behälteröffnung an einer kurzen Seite und/oder an einer langen Seite und/oder an der Oberseite des Behälters ausgebildet.

Eine Bearbeitungsanlage nach Anspruch 3 gewährleistet ein einfaches, flexibles, sicheres und zuverlässiges Durchführen von Gleisarbeiten. Der Behälter weist zwei einander gegenüberliegende lange Seiten, zwei einander gegenüberliegende kurze Seiten, eine Unterseite und eine gegenüberliegende Oberseite auf. Die mindestens eine Behälteröffnung ist abhängig von den durchzuführenden Gleisarbeiten an mindestens einer kurzen Seite und/oder mindestens einer langen Seite und/oder an der Oberseite ausgebildet. Vorzugsweise ist die mindestens eine Behälteröffnung an einer kurzen Seite ausgebildet. Da der Behälter als Container ausgebildet ist, ist an der Unterseite des Behälters keine Behälteröffnung zum Durchführen des mindestens einen Mehrachs-Roboters ausgebildet.

Eine Bearbeitungsanlage nach Anspruch 4 gewährleistet ein einfaches, flexibles, sicheres und zuverlässiges Durchführen von Gleisarbeiten. Durch das mindestens eine Abdeckelement kann die mindestens eine Behälteröffnung in der Transportposition verschlossen werden und zum Überführen des Mehrachs-Roboters von der Transportposition in die Arbeitsposition geöffnet werden. Der Mehrachs-Roboter und die Verlagerungseinrichtung sind somit in der Transportposition in dem Behälter geschützt. Das mindestens eine Abdeckelement kann in einfacher Weise geöffnet werden, so dass die mindestens eine Behälteröffnung zum Durchführen des Mehrachs-Roboters freigegeben wird. Das mindestens eine Abdeckelement kann beispielsweise manuell und/oder mittels eines Antriebs betätigt werden. Die mindestens eine Behälteröffnung ist insbesondere an einer kurzen Seite und/oder einer langen Seite und/oder einer Oberseite des Behälters angeordnet. Das mindestens eine Abdeckelement ist beispielsweise als Abdeccklappe, als ein- oder mehrteilige Türe, als Rollladen und/oder als Sektionaltor ausgebildet.

Eine Bearbeitungsanlage nach Anspruch 5 gewährleistet ein einfaches, flexibles, sicheres und zuverlässiges Durchführen von Gleisarbeiten. Durch die Befestigungselemente kann der Behälter an einem Fahrgestell reversibel befestigt werden. Die Bearbeitungsanlage kann hierdurch einfach, sicher und zuverlässig an den Einsatzort transportiert werden. Durch Lösen der Befestigungselemente kann der Behälter wieder von dem Fahrgestell getrennt werden, so dass die Bearbeitungsanlage am Einsatzort oder bei der Lagerung nicht auf dem Fahrgestell verbleiben muss. Das Fahrgestell kann dann anderweitig verwendet werden, beispielsweise für den Transport von Gütern mittels Containern. Vorzugsweise sind die Befestigungselemente jeweils Teil einer Drehverbindung. Die jeweilige Drehverbindung dient zum Ausbilden einer formschlüssigen Verbindung zwischen dem Behälter bzw. dem Container und dem Fahrgestell. Die formschlüssige Verbindung wird durch Verdrehen des jeweiligen Befestigungselements und eines Gegenbefestigungselements relativ zueinander verriegelt bzw. entriegelt. Die Gegenbefestigungselemente sind an dem Fahrgestell befestigt. Derartige Drehverbindungen sind als Twistlock-Verbindungen bekannt.

Eine Bearbeitungsanlage nach Anspruch 6 gewährleistet ein einfaches, flexibles, sicheres und zuverlässiges Durchführen von Gleisarbeiten. Dadurch, dass die Verlagerungseinrichtung mindestens eine Linearachse ausbildet, kann der Mehrachs-Roboter in einfacher Weise zwischen der Transportposition und der Arbeitsposition verlagert werden. Die Verlagerungseinrichtung weist insbesondere eine Linearführung und einen darauf geführten Schlitten auf. Der Verlagerungseinrichtung ist vorzugsweise mittels eines Antriebs betätigbar. Die mindestens eine Linearachse verläuft insbesondere in einer horizontalen Richtung und/oder in einer vertikalen Richtung. Vorzugsweise verläuft die mindestens eine Linearachse parallel zu langen Seiten des Behälters. Die Verlagerungseinrichtung umfasst beispielsweise ein Montageelement, das als quaderförmiger Rahmen ausgebildet ist. Das Montageelement ist insbesondere an mindestens zwei Seiten des Behälters mittels einer Linearführung geführt. Vorzugsweise führt die Linearführung das Montageelement im Inneren des Behälters und/oder an gegenüberliegenden Seiten, beispielsweise an der Unterseite und an der Oberseite und/oder an den gegenüberliegenden langen Seiten. Der quaderförmige Rahmen ist insbesondere durch Längsstreben, Querstreben und Vertikalstreben gitterartig ausgebildet. Das Montageelement dient zum Befestigen des mindestens einen Mehrachs-Roboters. Vorzugsweise bildet die mindestens eine Verlagerungseinrichtung mindestens zwei Linearachsen zum horizontalen Verlagern und/oder zum vertikalen Verlagern des mindestens einen Mehrachs-Roboters aus.

Eine Bearbeitungsanlage nach Anspruch 7 gewährleistet ein einfaches, flexibles, sicheres und zuverlässiges Durchführen von Gleisarbeiten. Die mindestens eine Schwenkachse verläuft vorzugsweise parallel zu einer horizontalen Richtung und/oder parallel zu einer vertikalen Richtung. Die Verlagerungseinrichtung weist zur Ausbildung der mindestens einen Schwenkachse insbesondere einen Drehteller und/oder eine Schwenkbrücke auf, an dem der Mehrachs-Roboter befestigt ist. Der Mehrachs-Roboter ist beispielsweise manuell oder mittels eines Antriebs um die mindestens eine Schwenkachse verschwenkbar. Durch die Ausbildung mindestens einer Schwenkachse weist die Bearbeitungsanlage eine hohe Flexibilität bei der Durchführung von Gleisarbeiten auf.

Eine Bearbeitungsanlage nach Anspruch 8 gewährleistet ein einfaches, flexibles, sicheres und zuverlässiges Durchführen von Gleisarbeiten. Durch die Arretierung der Verlagerungseinrichtung ist der Mehrachs-Roboter in der Transportposition und/oder in der Arbeitsposition gesichert. Die Verlagerungseinrichtung ist beispielsweise manuell und/oder automatisch arretierbar.

Eine Bearbeitungsanlage nach Anspruch 9 gewährleistet ein einfaches und flexibles Durchführen von Gleisarbeiten. Dadurch, dass in dem Behälter ein Werkzeugmagazin angeordnet ist, stehen dem Mehrachs-Roboter geeignete Werkzeuge zum Durchführen verschiedener Gleisarbeiten zur Verfügung. Die Bearbeitungsanlage ermöglicht hierdurch einen automatischen Werkzeugwechsel. Der automatische Werkzeugwechsel kann derart erfolgen, dass der Mehrachs-Roboter ein nicht mehr benötigtes Werkzeug selbsttätig in dem Werkzeugmagazin ablegt und/oder ein benötigtes Werkzeug selbsttätig aus dem Werkzeugmagazin greift. Bei Bedarf kann zusätzlich zu dem Werkzeugmagazin ein Werkzeugwechsler in dem Behälter angeordnet sein. **In** diesem Fall überführt der Werkzeugwechsler ein nicht mehr benötigtes Werkzeug von dem Mehrachs-Roboter zu dem Werkzeugmagazin und legt dieses in dem Werkzeugmagazin ab. Entsprechend entnimmt der Werkzeugwechsler ein benötigtes Werkzeug aus dem Werkzeugmagazin und überführt dieses zu dem Mehrachs-Roboter. Das Werkzeugmagazin und/oder der Werkzeugwechsler ist vorzugsweise linear verlagerbar, insbesondere parallel zu langen Seiten des Behälters.

Eine Bearbeitungsanlage nach Anspruch 10 gewährleistet eine einfache, flexible und zuverlässige Durchführung von Gleisarbeiten. Die Trockeneisbereitstellungseinheit ermöglicht ein Behandeln, insbesondere ein Reinigen von Oberflächen. Die Trockeneisbereitstellungseinheit umfasst als Werkzeug mindestens eine Behandlungsdüse, die an dem Mehrachs-Roboter angeordnet bzw. von diesem gehalten werden kann. Die mindestens eine Behandlungsdüse wird beispielsweise in einem Werkzeugmagazin bereitgestellt. Die Trockeneisbereitstellungseinheit ist in dem Behälter und/oder in einem zusätzlichen Behälter angeordnet. Beispielsweise sind ein CO₂-Vorratsbehälter, ein Pelletierer und ein Trockeneis-Vorratsbehälter in dem zusätzlichen Behälter angeordnet, so dass in dem Trockeneis-Vorratsbehälter Trockeneispellets bereitgestellt werden. **In** dem zusätzlichen Behälter sind beispielsweise ein Drucklufterzeuger und ein Dosierer angeordnet, der aus den Trockeneispellets und Druckluft ein Trockeneis-Druckluft-Gemisch erzeugt. Das Trockeneis-Druckluft-Gemisch wird über eine Zuführleitung von dem zusätzlichen Behälter in den Behälter geführt. Die Zuführleitung ist mit der mindestens einen Behandlungsdüse verbunden. Der zusätzliche Behälter ist insbesondere ein Container, beispielsweise ein Standard-Container bzw. ein ISO-Container. Vorzugsweise ist der zusätzliche Behälter entsprechend dem Behälter ausgebildet.

Eine Bearbeitungsanlage nach Anspruch 11 gewährleistet ein einfaches, flexibles und zuverlässiges Durchführen von Gleisarbeiten. Dadurch, dass die Bearbeitungsanlage einen Energieerzeuger und/oder einen Energiespeicher umfasst, ist die Bearbeitungsanlage weitestgehend autark betreibbar. Die Bearbeitungsanlage ist somit unabhängig von einer externen Energieversorgung betreibbar. Der Energieerzeuger dient insbesondere zum Bereitstellen elektrischer Energie. Vorzugsweise umfasst der Energieerzeuger ein Stromaggregat mit einem mittels eines Brennstoffs betreibbaren Antrieb und einem damit angetriebenen Stromgenerator. Der Energiespeicher ist insbesondere als Akkumulator ausgebildet. Der Energieerzeuger und/oder der Energiespeicher können in dem Behälter und/oder in einem zusätzlichen Behälter angeordnet sein. Der zusätzliche Behälter ist insbesondere ein Container, beispielsweise ein Standard-Container bzw. ein ISO-Container. Vorzugsweise ist der zusätzliche Behälter entsprechend dem Behälter ausgebildet.

Eine Bearbeitungsanlage nach Anspruch 12 gewährleistet ein einfaches, flexibles, sicheres und zuverlässiges Durchführen von Gleisarbeiten. Der mindestens eine Sensor ist insbesondere an dem Mehrachs-Roboter und/oder an dem Behälter und/oder an der Verlagerungseinrichtung angeordnet. Vorzugsweise ist der mindestens eine Sensor als optischer Sensor und/oder optischer Detektor ausgebildet. Der mindestens eine Sensor ist beispielsweise ein Radarsensor und/oder ein Laserscanner und/oder eine Kamera. Der mindestens eine Sensor dient insbesondere zum Erfassen des zu bearbeitenden Gegenstands und/oder zum Steuern bzw. Positionieren des Mehrachs-Roboters und/oder zum Überwachen eines Arbeitsraums.

Eine Bearbeitungsanlage nach Anspruch 13 gewährleistet ein einfaches, flexibles, sicheres und zuverlässiges Durchführen von Gleisarbeiten. Die Steuereinheit ist vorzugsweise in Signalverbindung mit dem Mehrachs-Roboter und/oder der Verlagerungseinrichtung und/oder mindestens einem Sensor und/oder einem Werkzeugwechsler und/oder einem Energieerzeuger und/oder einem Energiespeicher und/oder einer Trockeneisbereitstellungseinheit. Die Steuereinheit kann in dem Behälter und/oder einem zusätzlichen Behälter angeordnet sein. Der zusätzliche Behälter ist insbesondere ein Container, beispielsweise ein Standard-Container bzw. ein ISO-Container. Vorzugsweise ist der zusätzliche Behälter entsprechend dem Behälter ausgebildet.

Eine Bearbeitungsanlage nach Anspruch 14 gewährleistet ein einfaches, flexibles, sicheres und zuverlässiges Durchführen von Gleisarbeiten. Das mindestens eine Schutzelement dient beispielsweise zum Schutz vor Umwelteinflüssen und/oder zum Abgrenzen eines Arbeitsraums, um eine Gefahr für Personen zu vermeiden. Das mindestens eine Schutzelement ist vorzugsweise an dem Behälter und/oder an der Verlagerungseinrichtung angeordnet. Vorzugsweise ist das mindestens eine Schutzelement relativ zu dem Behälter und/oder zu der Verlagerungseinrichtung verlagerbar. Das mindestens eine Schutzelement ist beispielsweise in einer Transportposition innerhalb des Behälters angeordnet und in einer Arbeitsposition zumindest teilweise außerhalb des Behälters angeordnet. Vorzugsweise umgibt das mindestens eine Schutzelement den Arbeitsraum, in dem der mindestens eine Mehrachs-Roboter angeordnet ist. Das mindestens eine Schutzelement ist insbesondere an einem quaderförmigen Montageelement angeordnet und umgibt einen Arbeitsraum an mindestens zwei langen Seiten, an mindestens einer kurzen Seite und an einer Oberseite. Vorzugsweise ist mindestens ein Schutzelement verlagerbar an einem Montageelement der Verlagerungseinrichtung angeordnet. Das mindestens eine Schutzelement ist relativ zu der Verlagerungseinrichtung bzw. relativ zu dem Montageelement zwischen einer Transportposition und einer Arbeitsposition verlagerbar. **In** der Transportposition ist das mindestens eine Schutzelement innerhalb des Behälters angeordnet. **In** einer Arbeitsposition ist das mindestens eine Schutzelement derart verlagert, dass der Arbeitsraum zwischen der Verlagerungseinrichtung und dem Gleis abgegrenzt ist. Vorzugsweise sind an der Verlagerungseinrichtung mindestens zwei Schutzelemente angeordnet, die U-förmig ausgebildet sind. Hierdurch kann der Arbeitsraum zwischen der Verlagerungseinrichtung und dem Gleis nach allen Seiten abgegrenzt werden. Das mindestens eine Schutzelement ist insbesondere lichtundurchlässig ausgebildet.

Eine Bearbeitungsanlage nach Anspruch 15 gewährleistet ein einfaches, flexibles, sicheres und zuverlässiges Durchführen von Gleisarbeiten. Der erste Mehrachs-Roboter dient zum Durchführen von Vorarbeiten und/oder Nacharbeiten in Verbindung mit dem Auftragsschweißen und/oder mit dem Verbindungsschweißen. Der erste Mehrachs-Roboter dient beispielsweise zum Schleifen und/oder Fräsen einer Schiene. Der zweite Mehrachs-Roboter dient zum Auftragsschweißen auf eine Schiene und/oder zum Verbindungsschweißen von zwei Schienen bzw. Schienenabschnitten. **In** einer Werkzeugaufnahme des ersten Mehrachs-Roboters ist beispielsweise ein Schleifwerkzeug und/oder ein Fräswerkzeug drehantreibbar aufgenommen. **In** einer Wekrzeugaufnahme des zweiten Mehrachs-Roboters ist beispielsweise ein Schweißkopf aufgenommen. Der Schweißkopf ist in Verbindung mit einem Schweißgerät. Das Schweißgerät ist insbesondere an der Verlagerungseinrichtung bzw. an dem Montageelement angeordnet. Die Mehrachs-Roboter ermöglichen ein automatisiertes Verbindungsschweißen und/oder Auftragsschweißen.

Der Erfindung liegt ferner die Aufgabe zugrunde, eine Bearbeitungsvorrichtung zum Durchführen von Gleisarbeiten zu schaffen, die einfach, flexibel, sicher und zuverlässig einsetzbar ist.

Diese Aufgabe wird durch eine Bearbeitungsvorrichtung mit den Merkmalen des Anspruchs 16 gelöst. Dadurch, dass die erfindungsgemäße Bearbeitungsanlage an einem Fahrgestell angeordnet ist, ist die mindestens eine Bearbeitungsanlage einfach, flexibel, sicher und zuverlässig zu dem Einsatzort transportierbar und von diesem wieder abtransportierbar. Vorzugsweise ist die mindestens eine Bearbeitungsanlage reversibel an dem Fahrgestell befestigt. Die mindestens eine Bearbeitungsanlage ist also an dem Fahrgestell befestigbar und von diesem wieder lösbar. Hierdurch kann die mindestens eine Bearbeitungsanlage bei Bedarf von dem Fahrgestell demontiert werden und das Fahrgestell anderweitig verwendet werden. Das Fahrgestell ist beispielsweise Teil eines Schienenfahrzeugs, eines Straßenfahrzeugs, eines Geländefahrzeugs, wie beispielsweise eines Raupenfahrzeugs oder eines Schreitbaggers, eines schienengebundenen Flachwagens bzw. Güterwagens und/oder eines Anhängers bzw. Aufliegers.

Der Erfindung liegt ferner die Aufgabe zugrunde, ein Verfahren zu schaffen, das ein einfaches, flexibles, sicheres und zuverlässiges Durchführen von Gleisarbeiten ermöglicht.

Diese Aufgabe wird durch ein Verfahren mit den Merkmalen des Anspruchs 17 gelöst. Die Vorteile des erfindungsgemäßen Verfahrens entsprechen den bereits beschriebenen Vorteilen der erfindungsgemäßen Bearbeitungsanlage. Das erfindungsgemäße Verfahren kann insbesondere auch durch das Bereitstellen einer Bearbeitungsvorrichtung gemäß Anspruch 16 weitergebildet werden. Die Bearbeitungsanlage kann nach dem Transportieren zu der zu bearbeitenden Gleisstelle bzw. dem Einsatzort von dem Fahrgestell abgeladen werden oder auf diesem verbleiben. Nach dem Durchführen der Gleisarbeiten wird der Mehrachs-Roboter von der Arbeitsposition wieder in die Transportposition überführt und von der bearbeiteten Gleisstelle bzw. dem Einsatzort abtransportiert. Gegebenenfalls wird die mindestens eine Bearbeitungsanlage wieder auf ein Fahrgestell aufgeladen. Vorzugsweise wird die mindestens eine Verlagerungseinrichtung in der Arbeitsposition mittels mindestens eines Abstützelements an dem Gleis abgestützt.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht einer Bearbeitungsvorrichtung zum Durchführen von Gleisarbeiten gemäß einem ersten, nicht erfindungsgemäßen Ausführungsbeispiel mit einer auf einem Flachwagen angeordneten Bearbeitungsanlage in einem Transportzustand,
- Fig. 2: eine Rückansicht der Bearbeitungsvorrichtung in Fig. 1,
- Fig. 3: eine Seitenansicht der Bearbeitungsvorrichtung gemäß Fig. 1 in einem Arbeitszustand der Bearbeitungsanlage,
- Fig. 4: eine Seitenansicht einer Bearbeitungsvorrichtung gemäß einem zweiten, nicht erfindungsgemäßen Ausführungsbeispiel in einem Transportzustand,
- Fig. 5: eine Seitenansicht einer Bearbeitungsvorrichtung gemäß einem dritten, nicht erfindungsgemäßen Ausführungsbeispiel in einem Transportzustand,
- Fig. 6: eine geschnittene Seitenansicht einer Bearbeitungsvorrichtung zum Durchführen von Gleisarbeiten gemäß einem vierten Ausführungsbeispiel in einem Transportzustand,
- Fig. 7: eine erste perspektivische Ansicht der Bearbeitungsvorrichtung gemäß Fig. 6 während des Überführens von dem Transportzustand in einen Arbeitszustand,
- Fig. 8: eine zweite perspektivische Ansicht der Bearbeitungsvorrichtung gemäß Fig. 6 während des Überführens von dem Transportzustand in den Arbeitszustand,
- Fig. 9: eine perspektivische Ansicht der Bearbeitungsvorrichtung gemäß Fig. 6 in dem Arbeitszustand, und
- Fig. 10: eine teilweise geschnittene Seitenansicht der Bearbeitungsvorrichtung in dem Arbeitszustand gemäß Fig. 9.

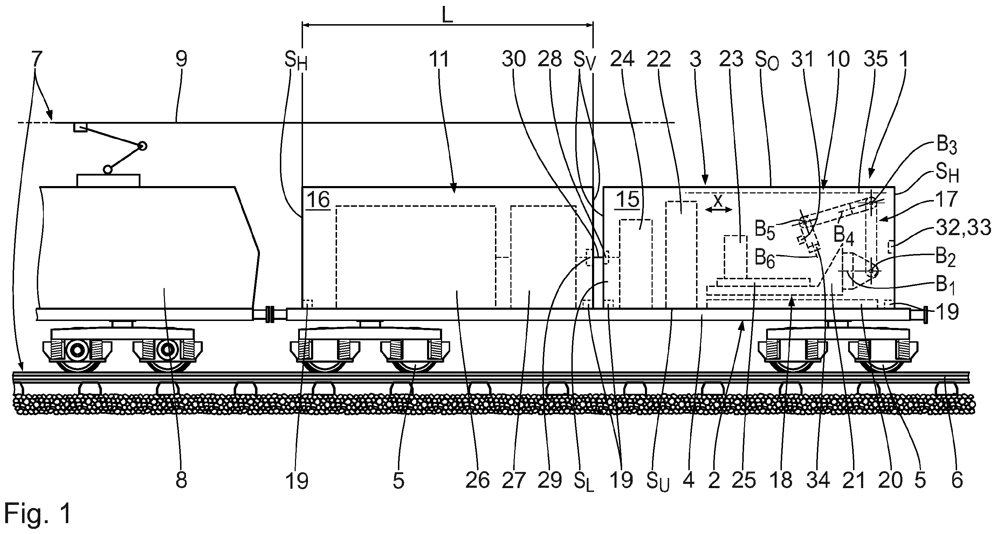

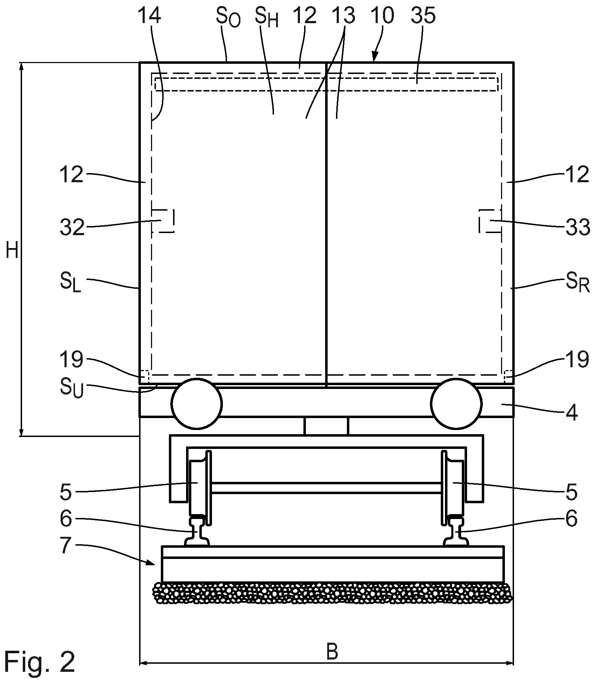

Nachfolgend ist anhand der Fig. 1 bis 3 ein erstes, nicht erfindungsgemäßes Ausführungsbeispiel beschrieben. Eine Bearbeitungsvorrichtung 1 zum Durchführen von Gleisarbeiten umfasst einen schienengebundenen Flachwagen 2, an dem eine Bearbeitungsanlage 3 befestigt ist. Der Flachwagen 2 umfasst ein Fahrgestell 4, an dem mehrere Achsen mit daran befestigten Rädern 5 drehbar gelagert sind. Die Räder 5 sind auf Schienen 6 einer **Gleisanlage** 7 geführt. Die Bearbeitungsvorrichtung 1 ist in dem in Fig. 1 dargestellten Transportzustand mit einem Schienenfahrzeug 8 gekoppelt. Das Schienenfahrzeug 8 ist elektrisch betreibbar und über eine Oberleitung 9 der Gleisanlage 7 mit elektrischer Energie versorgt.

Die Bearbeitungsanlage 3 umfasst einen ersten Behälter 10 und einen zweiten Behälter 11. Die Behälter 10, 11 sind als Standard-Container bzw. ISO-Container ausgebildet. Die Behälter 10, 11 haben jeweils eine Unterseite Su, eine Oberseite So, zwei einander gegenüberliegende lange Seiten S_{L}, S_{R} und zwei einander gegenüberliegende kurze Seiten Sv, S_{H}. Die Unterseite Su, die Oberseite So und die Seiten S_{L}, S_{R} und Sv werden durch feste Wände 12 gebildet, wohingegen die Seite S_{H} durch ein Abdeckelement 13 in Form einer zweiteiligen Türe gebildet wird. Das Abdeckelement 13 ist relativ zu den Wänden 12 verlagerbar. Das Abdeckelement 13 kann geöffnet oder geschlossen werden, so dass das Abdeckelement 13 eine Behälteröffnung 14 freigibt oder verschließt.

Die Behälter 10, 11 weisen eine Länge L, eine Breite B und eine Höhe H auf. Für die Länge L gilt: 280 cm ≤ L ≤ 1.700 cm, insbesondere cm 500 ≤ L ≤ 1.300 cm, und insbesondere 600 cm ≤ L ≤ 610 cm. Für die Breite B gilt: 100 cm ≤ B ≤ 300 cm, insbesondere 200 cm ≤ B ≤ 280 cm, und insbesondere 240 cm ≤ B ≤ 250 cm. Für die Höhe H gilt: 100 cm ≤ H ≤ 300 cm, insbesondere 180 cm ≤ H ≤ 290 cm, und insbesondere 250 cm ≤ H ≤ 280 cm. Der erste Behälter 10 begrenzt einen ersten Innenraum 15. Entsprechend begrenzt der zweite Behälter 11 einen zweiten Innenraum 16. Die Behälter 10, 11 weisen im Bereich der Unterseite Su mehrere Befestigungselemente 19 auf, die zum Befestigen an dem Fahrgestell 4 mit Gegen-Befestigungselementen des Flachwagens 2 zusammenwirken. Die Gegen-Befestigungselemente sind nicht näher dargestellt.

Die Bearbeitungsanlage 3 umfasst zum Durchführen von Gleisarbeiten einen Mehrachs-Roboter 17 und eine zugehörige Verlagerungseinrichtung 18. Der Mehrachs-Roboter 17 ist an der Verlagerungseinrichtung 18 angeordnet, so dass der Mehrachs-Roboter 17 von einer Transportposition in dem Innenraum 15 durch die geöffnete Behälteröffnung 14 in eine Arbeitsposition außerhalb des Innenraums 15 verlagerbar ist.

Der Mehrachs-Roboter 17 ist als Industrieroboter ausgebildet. Der Mehrachs-Roboter 17 weist sechs Bewegungsachsen auf, die im Einzelnen mit B₁ bis B₆ bezeichnet sind. Der Aufbau des Mehrachs-Roboters 17 ist bekannt und üblich.

Die Verlagerungseinrichtung 18 umfasst eine Führung 20 und ein als Schlitten ausgebildetes Montageelement 21. Die Führung 20 ist im Innenraum 15 im Bereich der Unterseite Su an dem Behälter 10 befestigt. Die Führung 20 ist benachbart zu der Behälteröffnung 14 angeordnet. Die Führung 20 ist als Linearführung ausgebildet. Die Verlagerungseinrichtung 18 weist somit eine Linearachse x auf. Das Montageelement 21 ist mittels eines nicht näher dargestellten Antriebs entlang der Linearachse x auf der Führung 20 verlagerbar. Das Montageelement 21 ist im Querschnitt L-förmig ausgebildet und weist einen langen Schenkel und einen kurzen Schenkel auf. Im Bereich des langen Schenkels ist das Montageelement 21 an der Führung 20 gelagert, wohingegen sich der kurze Schenkel im Wesentlichen senkrecht zu dem langen Schenkel und der Führung 20 erstreckt. Im Bereich des kurzen Schenkels ist der Mehrachs-Roboter 17 an dem Montageelement 21 in einer im Wesentlichen horizontalen Position befestigt.

Der Mehrachs-Roboter 17 und die Verlagerungseinrichtung 18 sind in dem in Fig. 1 dargestellten Transportzustand der Bearbeitungsvorrichtung 1 in einer Transportposition. In der Transportposition sind der Mehrachs-Roboter 17 und die Verlagerungseinrichtung 18 vollständig in dem Innenraum 15 angeordnet, so dass der Behälter 10 mittels des Abdeckelements 13 verschließbar ist. Die Verlagerungseinrichtung 18 ist in der Transportposition arretierbar.

Die Bearbeitungsanlage 3 umfasst weiterhin ein Werkzeugmagazin 22 mit einem zugehörigen Werkzeugwechsler 23 zum Durchführen eines automatischen Werkzeugwechsels und eine Steuereinheit 24. Das Werkzeugmagazin 22 und der Werkzeugwechsler 23 sind in dem Innenraum 15 angeordnet. Das Werkzeugmagazin 22 ist im Bereich der Unterseite S_{U} an dem Behälter 10 befestigt. Demgegenüber ist der Werkzeugwechsler 23 an einem Werkzeugwechsler-Schlitten 25 angeordnet, der an dem Montageelement 21 linear verlagerbar angeordnet ist. Der Werkzeugwechsler 23 ist mittels eines nicht näher dargestellten Antriebs in Richtung der Linearachse x zwischen dem Werkzeugmagazin 22 und dem Mehrachs-Roboter 17 linear verlagerbar.

Die Bearbeitungsanlage 3 umfasst weiterhin einen Energieerzeuger 26 und einen Energiespeicher 27 zur Bereitstellung von elektrischer Energie. Der Energieerzeuger 26 und der Energiespeicher 27 sind in dem Innenraum 16 des zweiten Behälters 11 angeordnet. Der Energieerzeuger 26 umfasst beispielsweise ein Stromaggregat mit einem mittels eines Brennstoffs betreibbaren Antrieb und einen damit angetriebenen Stromgenerator. Der Energiespeicher 27 ist beispielsweise als Akkumulator ausgebildet.

Der erste Behälter 10 weist zur Übertragung von elektrischer Energie einen ersten Anschluss 28 und der zweite Behälter 11 einen zweiten Anschluss 29 auf. Die Anschlüsse 28, 29 sind über eine Versorgungsleitung 30 miteinander verbunden, so dass der in dem Behälter 10 angeordnete Teil der Bearbeitungsanlage 3 mit elektrischer Energie versorgt wird. An den Anschluss 28 kann alternativ eine externe Versorgungsleitung angeschlossen werden, so dass eine externe Energieversorgung ermöglicht wird. In diesem Fall ist der Behälter 11 mit dem Energieerzeuger 26 und dem Energiespeicher 27 nicht erforderlich.

Zum Steuern des Mehrachs-Roboters 17 und zum Überwachen eines Arbeitsraums A des Mehrachs-Roboters 17 weist die Bearbeitungsanlage 3 Sensoren 31, 32, 33 auf. Ein erster Sensor 31 ist als Kamera ausgebildet. Der erste Sensor 31 ist im Bereich einer Werkzeugaufnahme 34 des Mehrachs-Roboters 17 angeordnet. Ein zweiter Sensor 32 und ein dritter Sensor 33 sind als Kamera ausgebildet. Die Sensoren 32, 33 sind im Bereich der Behälteröffnung 14 im Innenraum 15 des Behälters 10 angeordnet. Die Sensoren 31, 32, 33 sind in Signalverbindung mit der Steuereinheit 24.

Zum Schutz eines Arbeitsraums A vor Umwelteinflüssen weist die Bearbeitungsanlage 3 ein Schutzelement 35 auf. Der Arbeitsraum A ist durch den Bewegungsbereich des Mehrachs-Roboters 17 definiert. Das Schutzelement 35 ist plattenförmig ausgebildet und im Bereich der Oberseite So linear verlagerbar an dem Behälter 10 gelagert. Das Schutzelement 35 ist manuell oder mittels eine Antriebs verlagerbar.

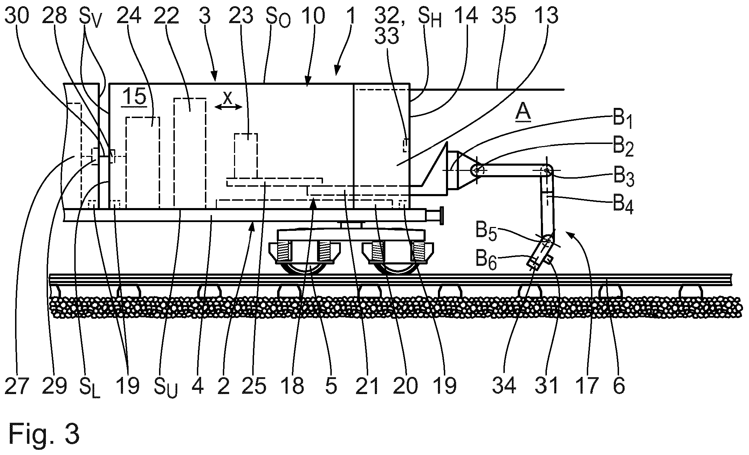

Fig. 3 zeigt die Bearbeitungsanlage 3 an einem Einsatzort bzw. an einer zu bearbeitenden Gleisstelle in einem Arbeitszustand. Der Mehrachs-Roboter 17 und die Verlagerungseinrichtung 18 sind in einer Arbeitsposition. Die Verlagerungseinrichtung 18 ist in der Arbeitsposition arretierbar. In der Arbeitsposition befindet sich der Mehrachs-Roboter 17 nicht länger in dem Innenraum 15, sondern in einem Außenraum des Behälters 10.

Nachfolgend ist die Funktionsweise der Bearbeitungsvorrichtung 1 beschrieben:
Die Bearbeitungsvorrichtung 1 befindet sich zunächst in dem in Fig. 1 dargestellten Transportzustand. Der Mehrachs-Roboter 17 und die Verlagerungseinrichtung 18 sowie das Schutzelement 35 sind vollständig innerhalb des Behälters 10 angeordnet. Die Behälter 10, 11 sind mittels des jeweiligen Abdeckelements 13 verschlossen. In dem Transportzustand tritt die Bearbeitungsanlage 3 nach außen als zwei Behälter 10, 11 in Erscheinung.

Die Bearbeitungsvorrichtung 1 ist an das Schienenfahrzeug 8 gekoppelt und wird mittels diesem an einen gewünschten Einsatzort bzw. eine zu bearbeitende Gleisstelle transportiert. An dem Einsatzort wird die Bearbeitungsvorrichtung 1 bzw. Bearbeitungsanlage 3 von dem Transportzustand in den in Fig. 3 dargestellten Arbeitszustand überführt. Hierzu wird zunächst das Abdeckelement 13 des Behälters 10 geöffnet. Das Montageelement 21 wird auf der Führung 20 entlang der Linearachse x linear verfahren, so dass die Verlagerungseinrichtung 18 von einer Transportposition in eine Arbeitsposition überführt wird. Die Verlagerungseinrichtung 18 wird in der Arbeitsposition arretiert. Der an dem Montageelement 21 befestigte Mehrachs-Roboter 17 wird entsprechend von einer Transportposition in eine Arbeitsposition überführt. In der Arbeitsposition befindet sich der Mehrachs-Roboter 17 außerhalb des Behälters 10. Das Schutzelement 35 ist in dem Arbeitszustand linear verlagert, so dass dieses den Arbeitsraum A zumindest teilweise abschirmt.

Mit dem Mehrachs-Roboter 17 können nun Gleisarbeiten durchgeführt werden, beispielsweise die Schienen 6 bearbeitet werden. Hierzu befindet sich in der Werkzeugaufnahme 34 ein nicht näher dargestelltes Werkzeug. Der erste Sensor 31 detektiert beispielsweise die zu bearbeitende Schiene 6, so dass der Mehrachs-Roboter 17 in gewünschter Weise mittels der Steuereinheit 24 gesteuert werden kann. Die Sensoren 32, 33 überwachen den Arbeitsraum A. Betritt beispielsweise eine Person den Arbeitsraum A, so wird dies von den Sensoren 32, 33 detektiert und von der Steuereinheit 24 erkannt, so dass die Steuereinheit 24 den Mehrachs-Roboter 17 stoppt.

Bei einem erforderlichen Werkzeugwechsel nimmt der Werkzeugwechsler 23 das benötigte Werkzeug aus dem Werkzeugmagazin 22. Der Werkzeugwechsler 23 wird anschließend mittels des Werkzeugwechsler-Schlittens 25 in Richtung des Mehrachs-Roboters 17 linear verfahren. Der Mehrachs-Roboter 17 legt das nicht mehr benötigte Werkzeug in dem Werkzeugwechsler 23 ab und entnimmt aus dem Werkzeugwechsler 23 das benötigte Werkzeug. Der Mehrachs-Roboter 17 kann anschließend die Bearbeitung fortsetzen. Der Werkzeugwechsler 23 wird wieder in Richtung des Werkzeugmagazins 22 linear verlagert und legt das nicht mehr benötigte Werkzeug in dem Werkzeugmagazin 22 ab.

Sind die Gleisarbeiten abgeschlossen, so wird der Mehrachs-Roboter 17 und die Verlagerungseinrichtung 18 wieder in die Transportposition überführt. Die Verlagerungseinrichtung 18 wird in der Transportposition arretiert. Das Schutzelement 35 wird in den Behälter 10 verlagert. Anschließend wird das Abdeckelement 13 des Behälters 10 geschlossen, so dass die Behälteröffnung 14 verschlossen ist. Die Bearbeitungsvorrichtung 1 kann nun mittels des Schienenfahrzeugs 8 abtransportiert werden.

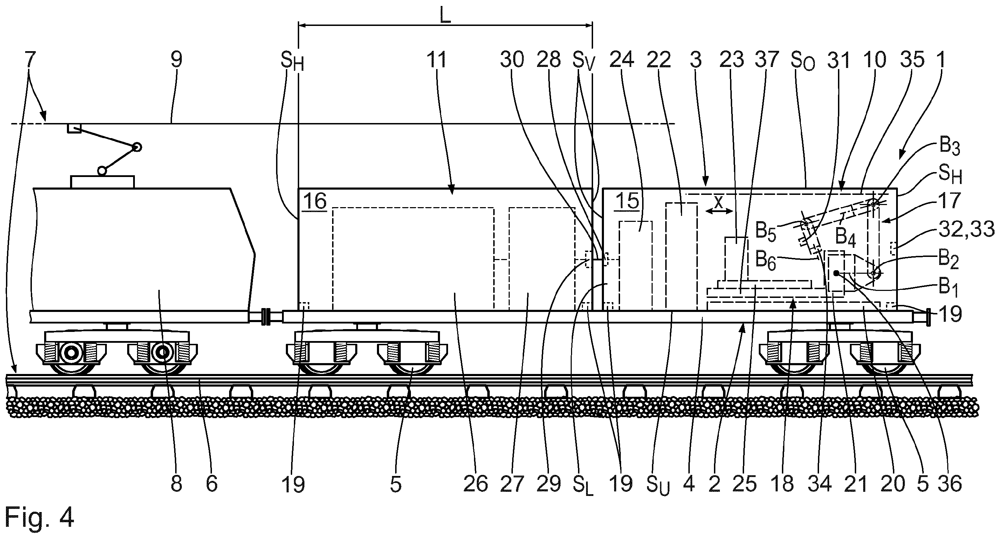

Nachfolgend ist anhand von Fig. 4 ein zweites, nicht erfindungsgemäßes Ausführungsbeispiel beschrieben. Im Unterschied zu dem ersten Ausführungsbeispiel weist die Verlagerungseinrichtung 18 zusätzlich eine Schwenkachse 36 zum Verschwenken des Mehrachs-Roboters 17 auf. Der Mehrachs-Roboter 17 ist um die horizontal verlaufende Schwenkachse 36 verschwenkbar, so dass der Mehrachs-Roboter 17 von einer horizontalen Position in eine vertikale Position verschwenkt wird. Durch ein Verschwenken um die Schwenkachse 36 kann somit die Bewegungsachse B₁ aus der in Fig. 4 dargestellten horizontalen Position in eine vertikale Position überführt werden. Hierzu ist das Montageelement 21 als Schwenkbrücke ausgebildet. Das Montageelement 21 ist Teil der Verlagerungseinrichtung 18 und an dem Schlitten 37 der Verlagerungseinrichtung 18 verschwenkbar gelagert. Durch ein Verschwenken in eine vertikale Position kann der Mehrachs-Roboter 17 die Oberleitung 9 erreichen. Hierdurch können Wartungs- und/oder Inspektionsarbeiten an der Oberleitung 9 durchgeführt werden. Hinsichtlich des weiteren Aufbaus und der weiteren Funktionsweise wird auf das erste Ausführungsbeispiel verwiesen.

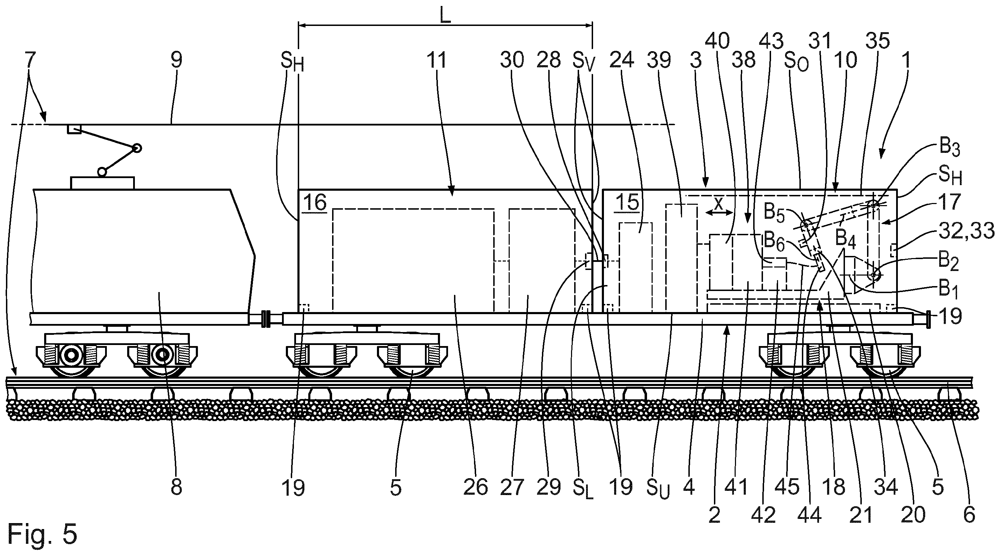

Nachfolgend ist anhand von Fig. 5 ein drittes, nicht erfindungsgemäßes Ausführungsbeispiel beschrieben. Im Unterschied zu den vorangegangenen Ausführungsbeispielen weist die Bearbeitungsanlage 3 eine Trockeneisbereitstellungseinheit 38 auf. Die Trockeneisbereitstellungseinheit 38 umfasst einen CO₂-Vorratsbehälter 39, einen Pelletierer 40, einen Trockeneis-Vorratsbehälter 41, einen Drucklufterzeuger 42 und einen Dosierer 43. Der CO₂-Vorratsbehälter 39 ist in dem Behälter 10 befestigt. Der Pelletierer 40, der Trockeneis-Vorratsbehälter 41, der Drucklufterzeuger 42 und der Dosierer 43 sind an dem als Schlitten ausgebildeten Montageelement 21 befestigt. Der Pelletierer 40 wird über eine Versorgungsleitung mit flüssigen CO₂ aus dem CO₂-Vorratsbehälter 39 versorgt und erzeugt Trockeneispellets, die in dem Trockeneis-Vorratsbehälter 41 gespeichert werden. Der Drucklufterzeuger 42 stellt Druckluft bereit, so dass mittels des Dosierers 43 ein Trockeneis-Druckluft-Gemisch bereitgestellt wird. Die Trockeneisbereitstellungseinheit 38 umfasst ferner eine Behandlungsdüse 44, die in der Werkzeugaufnahme 34 angeordnet ist und mittels des Mehrachs-Roboters 17 geführt wird. Die Behandlungsdüse 44 ist über eine Gemischleitung 45 mit dem Dosierer 43 verbunden. Die Gemischleitung 45 ist als flexibler Schlauch ausgebildet. Die Gemischleitung 45 ist insbesondere auf- und abrollbar gelagert und somit flexibel an die Bewegung des Mehrachs-Roboters 17 anpassbar. Mittels der Behandlungsdüse 44 kann das Trockeneis-Druckluft-Gemisch zur Behandlung von Oberflächen ausgebracht werden. Hinsichtlich des weiteren Aufbaus und der weiteren Funktionsweise wird auf die vorangegangenen Ausführungsbeispiele verwiesen.

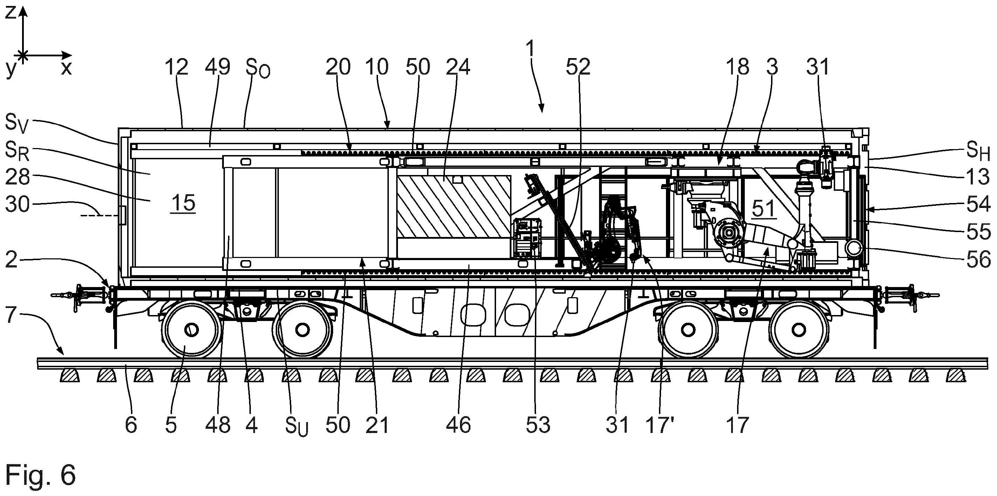

Nachfolgend ist anhand der Fig. 6 bis 10 ein viertes, erfindungsgemäßes Ausführungsbeispiel beschrieben. Die Bearbeitungsanlage 3 umfasst einen ersten Mehrachs-Roboter 17 zum Schleifen und/oder Fräsen der Schienen 6 und einen zweiten Mehrachs-Roboter 17' zum Schweißen, insbesondere zum Auftragsschweißen und/oder Verbindungsschweißen.

Das Montageelement 21 ist als quaderförmiger Rahmen ausgebildet. Das Montageelement 21 umfasst in einer x-Richtung verlaufende Längsstreben 46, in einer y-Richtung verlaufende Querstreben 47 und in einer z-Richtung verlaufende Vertikalstreben 48. Die x-Richtung, die y-Richtung und die z-Richtung verlaufen paarweise senkrecht zueinander und bilden ein kartesisches Koordinatensystem. Die Führung 20 ist als Linearführung ausgebildet. Die Führung weist ein quaderförmiges Grundgestell 49 auf, das im Innenraum 15 an dem Behälter 10 befestigt ist. An dem Grundgestell 49 sind an der Oberseite So und an der Unterseite Su Führungselemente 50 zum linearen Führen des Montageelements 21 angeordnet. Die Führungselemente 50 sind beispielsweise als Führungsrollen ausgebildet. Zum linearen Verlagern des Montagelements 21 sind die Führungselemente 50 beispielsweise mittels eines nicht näher dargestellten Antriebs drehantreibbar.

Das Montageelement 21 begrenzt einen Innenraum 51, in dem die Mehrachs-Roboter 17, 17' angeordnet sind. Der erste Mehrachs-Roboter 17 ist hängend an dem Montageelement 21 angeordnet. Hierzu bildet das Montageelement 21 eine parallel zu einer x-y-Ebene verlaufende Montageebene E₁ aus. Die erste Bewegungsachse B₁ des Mehrachs-Roboters 17 verläuft senkrecht zu der Montageebene E₁.

Der zweite Mehrachs-Roboter 17' ist in der x-Richtung zwischen dem ersten Mehrachs-Roboter 17 und der kurzen Seite Sv des Behälters 10 angeordnet. Der zweite Mehrachs-Roboter 17' ist an einer Linearführung 52 befestigt und mittels dieser in einer Ebene E₂ linear verlagerbar. Die Ebene E₂ schließt mit der Ebene E₁ einen Winkel α ein, wobei gilt: 0° < α ≤ 90°. Der zweite Mehrachs-Roboter 17' weist entsprechend zu dem ersten Mehrachs-Roboter 17 sechs Bewegungsachsen B₁ bis B₆ auf.

Zum Bearbeiten einer Schiene 6 ist in der Werkzeugaufnahme 34 des ersten Mehrachs-Roboters 17 ein Schleifwerkzeug und/oder ein Fräswerkzeug aufgenommen. Zum Durchführen eines Werkzeugwechsels ist das Werkzeugmagazin 22 an dem Montageelement 21 befestigt.

In der Werkzeugaufnahme 34 des zweiten Mehrachs-Roboters 17' ist ein Schweißkopf angeordnet. Der Schweißkopf ist Teil eines Schweißgeräts 53, das an dem Montageelement 21 befestigt ist.

Zum Abstützen in der Arbeitsposition umfasst die Verlagerungseinrichtung 18 Abstützelemente 54. Das Montageelement 21 umfasst ein erstes Ende, das in der Arbeitsposition von dem Behälter 10 entfernt angeordnet ist, und ein zweites Ende, das in der Arbeitsposition in dem Behälter 10 verbleibt. Die Abstützelemente 54 sind an dem ersten Ende angeordnet. Die Abstützelemente 54 sind in der z-Richtung relativ zu dem Montageelement 21 verlagerbar. Die Abstützelemente 54 sind beispielsweise mittels eines nicht näher dargestellten Antriebs ein- und ausfahrbar. In einer eingefahrenen Transportposition sind die Abstützelemente 54 in dem Innenraum 51 angeordnet. In einer ausgefahrenen Arbeitsposition sind die Abstützelemente 54 außerhalb des Innenraums 51 angeordnet. Die Abstützelemente 54 umfassen jeweils einen Träger 55 und eine an dem Träger 55 angeordnete Führungsrolle 56. Mittels der Führungsrolle 56 ist das Montageelement 21 an dem ersten Ende auf einer jeweiligen Schiene 6 abstützbar. Die Führungsrollen 56 weisen parallel zu der y-Richtung verlaufende Drehachsen auf und zentrieren das Montageelement 21 relativ zu den Schienen 6.

Zum Schutz des Arbeitsraums A sind an der Verlagerungseinrichtung 18 mehrere Schutzelemente 35 angeordnet. An dem Montageelement 21 sind an den langen Seiten, an der Oberseite und an der kurzen Seite, die das erste Ende bildet, Schutzelemente 35 angeordnet. Die Schutzelemente 35 sind in den Fig. 6 bis 10 lediglich angedeutet. Die Schutzelemente 35 sind beispielsweise folienartig ausgebildet und lichtundurchlässig, sodass durch das Schweißen im Arbeitsraum A keine Personen außerhalb des Arbeitsraums A gefährdet sind. Ferner ist zwischen den Abstützelementen 54 ein Schutzelement 35 angeordnet. Dieses Schutzelement 35 wird mit den Abstützelementen 54 ausgefahren und eingefahren.

Zum seitlichen Abgrenzen des Arbeitsraums A zwischen dem Montageelement 21 und dem Gleis sind seitlich an dem Montageelement 21 Rahmenbauteile 57 um Schwenkachsen S₁ und S₂ verschwenkbar angeordnet. Die Rahmenbauteile 57 sind U-förmig ausgebildet. An den Rahmenbauteilen 57 sind weitere Schutzelemente 35 angeordnet.

In dem in Fig. 6 dargestellten Transportzustand sind die Mehrachs-Roboter 17, 17' in dem Innenraum 51 des quaderförmigen Montageelements 21 angeordnet. Hierzu ist die Linearführung 52 in einem eingefahrenen Transportzustand. Ferner sind die Bewegungsachsen B₁ bis B₆ so verlagert, dass die Mehrachs-Roboter 17, 17' eine kompakte Transportposition innerhalb des Innenraums 51 einnehmen. Die Abstützelemente 54 sind eingefahren und innerhalb des Innenraums 51 angeordnet. Die Rahmenbauteile 57 sind eingeschwenkt. Das Montageelement 21 ist in den Innenraum 15 des Behälters 10 verlagert, sodass die Verlagerungseinrichtung 18 mit den daran angeordneten Mehrachs-Robotern 17, 17' vollständig in dem Innenraum 15 des Behälters 10 angeordnet ist.

Zum Überführen der Bearbeitungsanlage 3 in den Arbeitszustand werden die als Türen ausgebildeten Abdeckelemente 13 geöffnet, sodass die an der kurzen Seite S_{H} angeordnete Behälteröffnung 14 geöffnet ist.

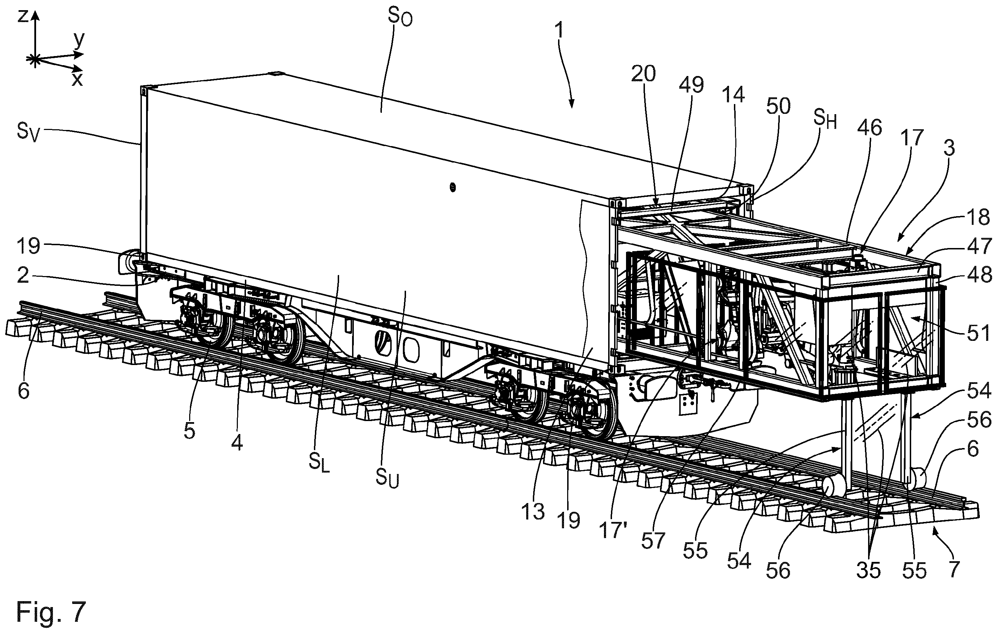

Das Montageelement 21 wird mittels der Führung 20 linear aus dem Behälter 10 gefahren. Die Abstützelemente 54 werden aus dem Innenraum 51 ausgefahren, bis die Führungsrollen 56 auf den Schienen 6 angeordnet sind. Die Abstützelemente 54 stützen das Montageelement 21 während des Ausfahrens und in dem Arbeitszustand ab. Während des Ausfahrens führen die Führungsrollen 56 das erste Ende des Montageelements 21. Hierzu rollen die Führungsrollen 56 auf den Schienen 6 ab. Fig. 7 zeigt die Bearbeitungsanlage 3 während des Ausfahrens.

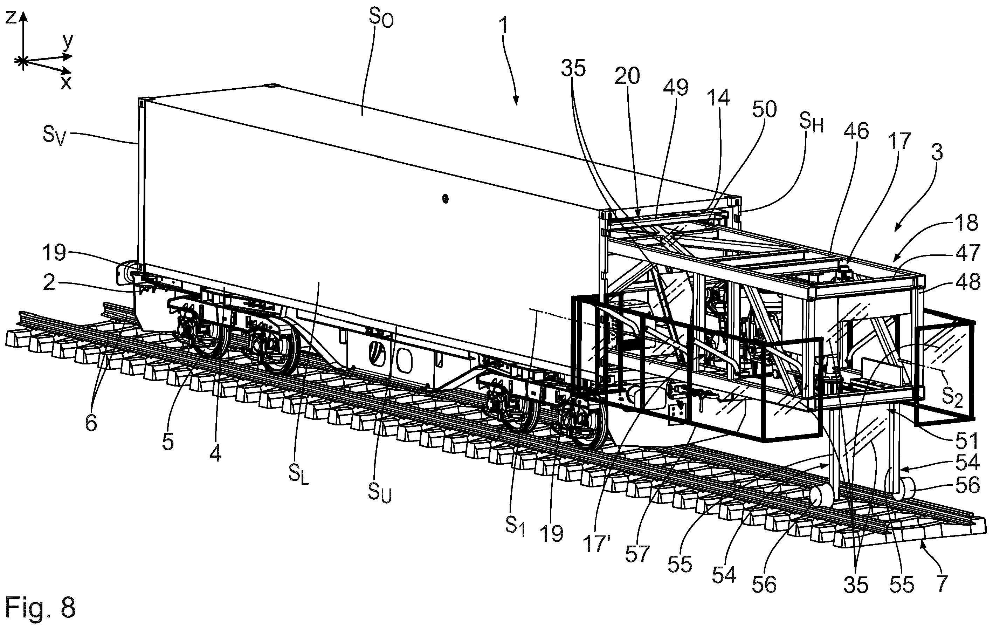

Ist das Montageelement 21 vollständig ausgefahren, so wird der Arbeitsraum A abgegrenzt bzw. abgeschirmt. Der Arbeitsraum A ist durch den Innenraum 51 und den Raum zwischen dem Montageelement 21 und dem Gleis gebildet. Das Montageelement 21 ist mittels der Schutzelemente 35 an den langen Seiten, an der Oberseite und an der ausgefahrenen kurzen Seite bereits abgeschirmt. Durch das Ausfahren der Abstützelemente 54 ist der Bereich zwischen dem ersten Ende und dem Gleis abgeschirmt. Zum Abschirmen der seitlichen Bereiche werden die Rahmenbauteile 57 um die Schwenkachsen S₁ und S₂ verschwenkt. Das Verschwenken kann manuell und/oder automatisch erfolgen. Fig. 8 zeigt die Bearbeitungsanlage 3 während des Ausschwenkens der Rahmenbauteile 57 mit den Schutzelementen 35.

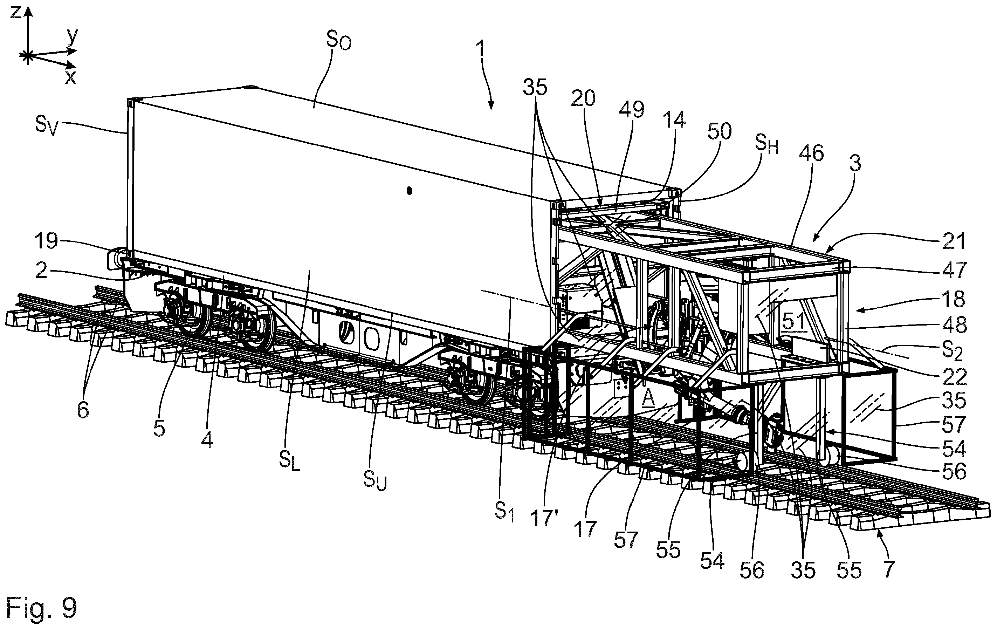

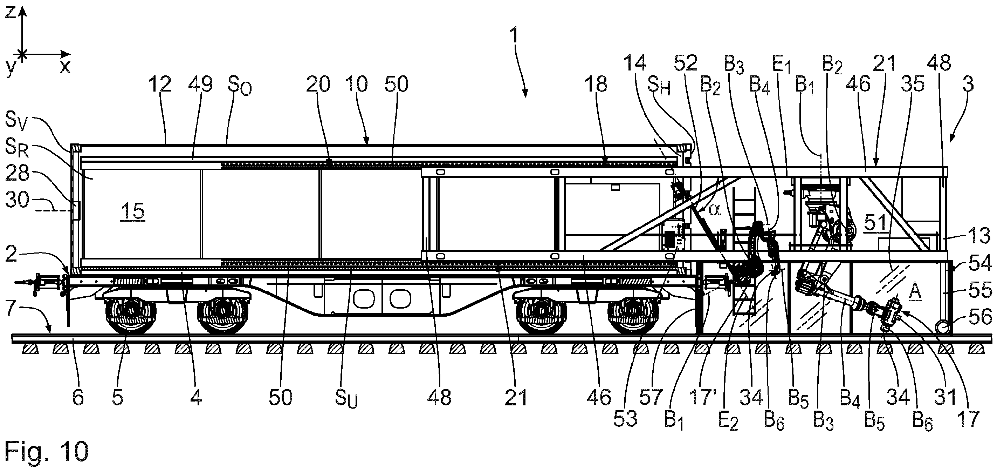

In den Fig. 9 und 10 ist die Bearbeitungsanlage 3 in dem Arbeitszustand gezeigt. Nachdem der Arbeitsraum A nach allen Seiten abgeschirmt wurde, beginnt das Durchführen der Gleisarbeiten. Mittels des ersten Mehrachs-Roboters 17 wird eine zu bearbeitende Schiene 6 für das Auftragsschweißen und/oder Verbindungsschweißen vorbereitet, beispielsweise durch eine Fräsbearbeitung oder Schleifbearbeitung. Anschließend wird mittels des zweiten Mehrachs-Roboters 17' der Schweißvorgang durchgeführt. Die Abstützelemente 54 stützen das erste Ende des Montageelements 21 während des Durchführens der Gleisarbeiten ab, sodass die Mehrachs-Roboter 17, 17' schwingungsarm bzw. vibrationsarm an dem Montageelement 21 gelagert sind. Hierdurch können die Gleisarbeiten genau und zuverlässig durchgeführt werden.

Das Überführen der Bearbeitungsanlage 3 von dem Arbeitszustand in den Transportzustand erfolgt in umgekehrter Weise. Hinsichtlich des weiteren Aufbaus und der weiteren Funktionsweise wird auf die vorangegangenen Ausführungsbeispiele verwiesen.

### Allgemein gilt:

Bei der Instandhaltung von Eisenbahn-Infrastruktur besteht ein erhebliches Automatisierungspotenzial. Die vorhandene Eisenbahn-Infrastruktur ist dazu geeignet, automatisierte Instandhaltungslösungen zum Einsatzort zu befördern. Bisher werden Instandhaltungsarbeiten überwiegend von Hand unter Zuhilfenahme handgeführter Werkzeuge durchgeführt. Die Instandhaltungsarbeiten bzw. Gleisarbeiten haben einen hohen manuellen Anteil und sind für Werker körperlich belastend. Weiterhin sind die Werker Umwelteinflüssen und Gefahren ausgesetzt.

Die erfindungsgemäße Bearbeitungsanlage umfasst einen Behälter, vorzugsweise mit Abmaßen und/oder Schnittstellen nach ISO-Norm und mit einem integrierten Mehrachs-Roboter. Vorzugsweise umfasst die Bearbeitungsanlage ein Werkzeugmagazin, eine Steuereinheit und/oder eine eigene Energieversorgung. Die Bearbeitungsanlage kann auf standardisierten Transportmitteln, wie beispielsweise einem Lastwagen, einem Eisenbahnwagen und/oder einem Containerschiff, transportiert werden und so zu dem Einsatzort gebracht werden. Während des Transports ist der Mehrachs-Roboter im geschlossenen Behälter vor Umwelteinflüssen geschützt. Am Einsatzort kann der Behälter ortsfest abgestellt werden oder auf einem Wagen befestigt werden, um mit wenig Aufwand flexibel verlagert werden zu können. Beispielsweise kann der Behälter über einen eigenen Antrieb zur Fortbewegung verfügen. Der Behälter kann beispielsweise mit einem Raupenfahrwerk oder einem Fahrwerk ähnlich eines Schreitbaggers verbunden werden. Am Einsatzort wird der Mehrachs-Roboter aus dem Behälter verlagert, um Wartungseinsätze und Gleisarbeiten an der Eisenbahn-Infrastruktur durchzuführen. Zum Verlagern ist der Mehrachs-Roboter an einer Verlagerungseinrichtung angeordnet. Die Verlagerungseinrichtung umfasst beispielsweise eine Linearführung mit einem Antrieb. Zum Transport kann die Verlagerungseinrichtung in einer Transportposition arretiert werden.

Zum Durchführen von Gleisarbeiten umfasst die Bearbeitungsanlage vorzugsweise ein Werkzeugmagazin mit für den jeweiligen Einsatz benötigten Werkzeugen und Geräten und bei Bedarf ein Werkzeugwechselsystem. Zusätzlich kann die Bearbeitungsanlage ein Materiallager umfassen.

Die Energieversorgung der Bearbeitungsanlage erfolgt entweder durch Zuführung elektrischer Energie von außen über einen Anschluss oder über eine eigene Energieversorgung.

Der Mehrachs-Roboter kann sowohl Arbeiten über Kopfhöhe, beispielsweise an Oberleitungen oder Oberleitungsmasten, als auch Arbeiten auf dem Boden, beispielsweise an Gleisen oder bodennahen Objekten durchführen. Weiterhin kann der Mehrachs-Roboter Arbeiten seitlich der Gleise, beispielsweise an Schallschutzwänden, durchführen.

Die Verlagerungseinrichtung kann je nach Bedarf unterschiedlich ausgebildet sein und ein Verfahren, ein Drehen und/oder ein Anheben des Mehrachs-Roboters ermöglichen.

Die Bearbeitungsanlage umfasst insbesondere Sensoren und eine Steuerung, die geeignet sind, den Mehrachs-Roboter in eine geeignete Lage zu bewegen, um die gewünschten Wartungsarbeiten durchzuführen.

Durch die Installation eines Mehrachs-Roboters in einem Behälter gemäß ISO-Norm bzw. in einem ISO-Container, gelten vereinfachte Schienennetzzugangsbedingungen und Zulassungsbedingungen für den Gebrauch und Transport am Gleis. Hierdurch ist die Bearbeitungsanlage einfach und flexibel einsetzbar.

Die Verlagerungseinrichtung ermöglicht insbesondere, dass ein Schlitten, an dem der Mehrachs-Roboter befestigt ist, über die Pufferbrust eines Güterwagens bzw. Flachwagens hinaus bewegt werden kann. Bei Bedarf ermöglicht die Verlagerungseinrichtung eine Kippung und/oder eine Drehung.

Die Verlagerungseinrichtung umfasst mindestens eine Linearachse, beispielsweise eine Linearachse in Längsrichtung und/oder eine Linearachse in Querrichtung und/oder eine Linearachse in Vertikalrichtung des Behälters. Die Verlagerungseinrichtung kann an einer Unterseite, einer Oberseite und/oder einer der langen Seiten an dem Behälter befestigt sein. In dem Behälter kann eine Sicherungseinrichtung vorgesehen sein, die einen Aktionsbereich des Mehrachs-Roboters und/oder der Verlagerungseinrichtung von einem abgesicherten Personenbereich trennt. In dem Personenbereich können von einem Werker Material oder Werkzeuge vorbereitet werden.

Die Bearbeitungsanlage kann eine Zusatzhebeeinrichtung umfassen, die in einem Behälter transportiert und an dem Einsatzort aus dem Behälter verlagert wird. Eine Zusatzhebeeinrichtung dient beispielsweise zur Reduktion des von dem Mehrachs-Roboter zu handhabenden Gewichts, da schwere Gegenstände mittels der Zusatzhebeeinrichtung gehandhabt werden können.

Die Bearbeitungsanlage ermöglicht eine Automatisierung der Arbeitsprozesse. Dies führt zu einer hohen und konstanten Qualität bei der Durchführung der Arbeiten und zu einer exakten Dokumentation der Arbeiten. Werker können entlastet und vor Umwelteinflüssen und Gefahren geschützt werden. Weiterhin können Arbeiten einfach und flexibel, insbesondere unabhängig von einer Tageszeit, durchgeführt werden.

Die erfindungsgemäße Bearbeitungsanlage ermöglicht somit eine einfache, flexible, sichere und zuverlässige Durchführung von Arbeiten an der Eisenbahn-Infrastruktur.

## Patentansprüche

1. Bearbeitungsanlage zum Durchführen von Gleisarbeiten mit
- mindestens einem Mehrachs-Roboter (17, 17'),
- einem als Container ausgebildeten Behälter (10) zur Aufnahme des mindestens einen Mehrachs-Roboters (17, 17') und
- mindestens einer Verlagerungseinrichtung (18) zum Verlagern des mindestens einen Mehrachs-Roboters (17, 17') zwischen einer Transportposition innerhalb des Behälters (10) und einer Arbeitsposition außerhalb des Behälters (10),
**dadurch gekennzeichnet,**
**dass** die mindestens eine Verlagerungseinrichtung (18) ein Montageelement (21) umfasst,
wobei das Montageelement (21) als quaderförmiger Rahmen ausgebildet ist,
wobei an dem Montageelement (21) der mindestens eine Mehrachs-Roboter (17, 17') befestigt ist,
wobei das Montageelement (21) einen Arbeitsraum (A) definiert, in dem der mindestens eine Mehrachs-Roboter (17, 17') angeordnet ist, wobei das Montageelement (21) relativ zu dem Behälter (10) verlagerbar ist, und
**dass** die mindestens eine Verlagerungseinrichtung (18) mindestens ein Abstützelement (54) zum Abstützen eines freien Endes des Montageelements (21) an einem Gleis umfasst.

2. Bearbeitungsanlage nach Anspruch 1, **dadurch gekennzeichnet, dass** der Behälter (10) mindestens eine Behälteröffnung (14) zum Durchführen des mindestens einen Mehrachs-Roboters (17. 17') umfasst.

3. Bearbeitungsanlage nach Anspruch 2, **dadurch gekennzeichnet, dass** die Behälteröffnung (14) an einer kurzen Seite (S_{H}, Sv) und/oder an einer langen Seite (S_{L}, S_{R}) und/oder an einer Oberseite (So) des Behälters (10) ausgebildet ist.

4. Bearbeitungsanlage nach mindestens einem der vorangegangenen Ansprüche, **dadurch gekennzeichnet,**
**dass** der Behälter (10) mehrere Wände (12) und mindestens ein relativ zu den Wänden (12) verlagerbares Abdeckelement (13) zum Öffnen und Verschließen mindestens einer Behälteröffnung (14) umfasst.

5. Bearbeitungsanlage nach mindestens einem der vorangegangenen Ansprüche, **dadurch gekennzeichnet,**
**dass** an dem Behälter (10) mehrere Befestigungselemente (19) zum Befestigen des Behälters (10) an einem Fahrgestell (4) angeordnet sind.

6. Bearbeitungsanlage nach mindestens einem der vorangegangenen Ansprüche, **dadurch gekennzeichnet,**
**dass** die mindestens eine Verlagerungseinrichtung (18) mindestens eine Linearachse (x) zum linearen Verlagern des mindestens einen Mehrachs-Roboters (17, 17') ausbildet.

7. Bearbeitungsanlage nach mindestens einem der vorangegangenen Ansprüche, **dadurch gekennzeichnet,**
**dass** die mindestens eine Verlagerungseinrichtung (18) mindestens eine Schwenkachse (36) zum Verschwenken des mindestens einen Mehrachs-Roboters (17, 17') ausbildet.

8. Bearbeitungsanlage nach mindestens einem der vorangegangenen Ansprüche, **dadurch gekennzeichnet,**
**dass** die mindestens eine Verlagerungseinrichtung (18) in der Transportposition und/oder in der Arbeitsposition arretierbar ist.

9. Bearbeitungsanlage nach mindestens einem der vorangegangenen Ansprüche, **dadurch gekennzeichnet,**
**dass in** dem Behälter (10) ein Werkzeugmagazin (22) angeordnet ist.

10. Bearbeitungsanlage nach mindestens einem der vorangegangenen Ansprüche, **gekennzeichnet**
**durch** eine Trockeneisbereitstellungseinheit (38) zum Behandeln von Oberflächen.

11. Bearbeitungsanlage nach mindestens einem der vorangegangenen Ansprüche, **gekennzeichnet**
**durch** einen Energieerzeuger (26) und/oder einen Energiespeicher (27).

12. Bearbeitungsanlage nach mindestens einem der vorangegangenen Ansprüche, **gekennzeichnet**
**durch** mindestens einen Sensor (31, 32) zum Steuern des mindestens einen Mehrachs-Roboters (17, 17') und/oder Überwachen des Arbeitsraums (A).

13. Bearbeitungsanlage nach mindestens einem der vorangegangenen Ansprüche, **gekennzeichnet**
**durch** eine Steuereinheit (24) zum Steuern des mindestens einen Mehrachs-Roboters (17, 17').

14. Bearbeitungsanlage nach mindestens einem der vorangegangenen Ansprüche, **gekennzeichnet**
**durch** mindestens ein Schutzelement (35) zum Schutz vor Umwelteinflüssen und/oder zum Abgrenzen des Arbeitsraums (A).

15. Bearbeitungsanlage nach mindestens einem der vorangegangenen Ansprüche, **gekennzeichnet**
**durch** einen ersten Mehrachs-Roboter (17) und einen zweiten Mehrachs-Roboter (17') zum Auftragsschweißen und/oder Verbindungsschweißen.

16. Bearbeitungsvorrichtung zum Durchführen von Gleisarbeiten umfassend
- ein Fahrgestell (4) und
- eine Bearbeitungsanlage (3) nach mindestens einem der Ansprüche 1 bis 15, die an dem Fahrgestell (4) angeordnet ist.

17. Verfahren zum Durchführen von Gleisarbeiten mit den Schritten:
- Bereitstellen einer Bearbeitungsanlage (3) nach mindestens einem der Ansprüche 1 bis 15,
- Transportieren der Bearbeitungsanlage (3) zu einer zu bearbeitenden Gleisstelle, wobei sich der mindestens eine Mehrachs-Roboter (17, 17') in der Transportposition innerhalb des Behälters (10) befindet,
- Überführen des mindestens einen Mehrachs-Roboters (17, 17') von der Transportposition in die Arbeitsposition außerhalb des Behälters (10) mittels der mindestens einen Verlagerungseinrichtung (18), und
- Durchführen der Gleisarbeiten mittels des mindestens einen Mehrachs-Roboters (17, 17').

## Claims

1. Processing system for performing track work with
- at least one multi-axis robot (17, 17'),
- a tank (10) in the form of a container for receiving the at least one multi-axis robot (17, 17') and
- at least one displacement device (18) for displacing the at least one multi-axis robot (17, 17') between a transport position inside the tank (10) and a working position outside the tank (10),
**characterized in**
**that** the at least one displacement device (18) comprises a mounting element (21),
wherein the mounting element (21) is designed as a cuboid frame,
wherein the at least one multi-axis robot (17, 17') is attached to the mounting element (21),
wherein the mounting element (21) defines a working space (A) in which the at least one multi-axis robot (17, 17') is arranged,
wherein the mounting element (21) is displaceable relative to the tank (10), and
**that** the at least one displacement device (18) comprises at least one support element (54) for supporting a free end of the mounting element (21) on a track.

2. Processing system according to claim 1, **characterized in that** the tank (10) comprises at least one tank opening (14) for passing through the at least one multi-axis robot (17. 17').

3. Processing system according to claim 2, **characterized in that** the tank opening (14) is formed on a short side (S_{H}, S_{V}) and/or on a long side (S_{L}, S_{R}) and/or on an upper side (S_{O}) of the tank (10).

4. Processing system according to at least one of the preceding claims,
**characterized in**
**that** the tank (10) comprises a plurality of walls (12) and at least one covering element (13), displaceable relative to the walls (12), for opening and closing at least one tank opening (14).

5. Processing system according to at least one of the preceding claims,
**characterized in**
**that** a plurality of fastening elements (19) for fastening the tank (10) to a chassis (4) are arranged at the tank (10).

6. Processing system according to at least one of the preceding claims,
**characterized in**
**that** the at least one displacement device (18) configures at least one linear axis (x) for linearly displacing the at least one multi-axis robot (17, 17').

7. Processing system according to at least one of the preceding claims,
**characterized in**
**that** the at least one displacement device (18) configures at least one swivel axis (36) for swiveling the at least one multi-axis robot (17, 17').

8. Processing system according to at least one of the preceding claims,
**characterized in**
**that** the at least one displacement device (18) is lockable in the transport position and/or in the working position.

9. Processing system according to at least one of the preceding claims,
**characterized in**
**that** a tool magazine (22) is arranged in the tank (10).

10. Processing system according to at least one of the preceding claims,
**characterized**
**by** a dry ice supply unit (38) for treating surfaces.

11. Processing system according to at least one of the preceding claims,
**characterized**
**by** an energy generator (26) and/or an energy storage (27).

12. Processing system according to at least one of the preceding claims,
**characterized**
**by** at least one sensor (31, 32) for controlling the at least one multi-axis robot (17, 17') and/or monitoring the working space (A).

13. Processing system according to at least one of the preceding claims,
**characterized**
**by** a control unit (24) for controlling the at least one multi-axis robot (17, 17').

14. Processing system according to at least one of the preceding claims,
**characterized**
**by** at least one protective element (35) for the protection against environmental influences and/or for delimiting the working space (A).

15. Processing system according to at least one of the preceding claims,
**characterized**
**by** a first multi-axis robot (17) and a second multi-axis robot (17') for buildup welding and/or joint welding.

16. Processing device for performing track work comprising
- a chassis (4) and
- a processing system (3) according to at least one of claims 1 to 15, which is arranged on the chassis (4).

17. Method for performing track work comprising the steps of:
- providing a processing system (3) according to at least one of claims 1 to 15,
- transporting the processing system (3) to a track location to be processed, wherein the at least one multi-axis robot (17, 17') is located inside the tank (10) in the transport position,
- transferring the at least one multi-axis robot (17, 17') from the transport position to the working position outside the tank (10) by means of the at least one displacement device (18), and
- performing the track work by means of the at least one multi-axis robot (17, 17').

## Revendications

1. Installation d'usinage pour la réalisation de travaux de voie, comportant
- au moins un robot à axes multiples (17, 17'),
- une enceinte (10) conçue comme un conteneur pour recevoir ledit au moins un robot à axes multiples (17, 17'), et
- au moins un dispositif de déplacement (18) pour déplacer ledit au moins un robot à axes multiples (17, 17') entre une position de transport à l'intérieur de l'enceinte (10) et une position de travail à l'extérieur de l'enceinte (10),
**caractérisée**
**en ce que** ledit au moins un dispositif de déplacement (18) comprend un élément de montage (21),
dans laquelle l'élément de montage (21) est réalisé sous la forme d'un bâti parallélépipédique,
dans laquelle ledit au moins un robot à axes multiples (17, 17') est fixé sur l'élément de montage (21),
dans laquelle l'élément de montage (21) définit un espace de travail (A) dans lequel ledit au moins un robot à axes multiples (17, 17') est agencé,
dans laquelle l'élément de montage (21) peut être déplacé par rapport à l'enceinte (10), et
**en ce que** ledit au moins un dispositif de déplacement (18) comprend au moins un élément de support (54) pour supporter une extrémité libre de l'élément de montage (21) sur une voie.

2. Installation d'usinage selon la revendication 1, **caractérisée**
**en ce que** l'enceinte (10) comprend au moins une ouverture d'enceinte (14) pour le passage dudit au moins un robot à axes multiples (17, 17') à travers celle-ci.

3. Installation d'usinage selon la revendication 2, **caractérisée en ce que** l'ouverture d'enceinte (14) est formée sur un côté court (S_{H}, Sv) et/ou sur un côté long (S_{L}, S_{R}) et/ou sur un côté supérieur (S_{O}) de l'enceinte (10).

4. Installation d'usinage selon au moins une des revendications précédentes,
**caractérisée**
**en ce que** l'enceinte (10) comprend plusieurs parois (12) et au moins un élément de recouvrement (13) qui peut être déplacé par rapport aux parois (12) pour ouvrir et fermer au moins une ouverture d'enceinte (14).

5. Installation d'usinage selon au moins une des revendications précédentes,
**caractérisée**
**en ce que** plusieurs éléments de fixation (19) sont agencés sur l'enceinte (10) pour fixer l'enceinte (10) sur un bogie (4).

6. Installation d'usinage selon au moins une des revendications précédentes,
**caractérisée**
**en ce que** ledit au moins un dispositif de déplacement (18) forme au moins un axe linéaire (x) pour déplacer linéairement ledit au moins un robot à axes multiples (17, 17').

7. Installation d'usinage selon au moins une des revendications précédentes,
**caractérisée**
**en ce que** ledit au moins un dispositif de déplacement (18) forme au moins un axe de pivotement (36) pour faire pivoter ledit au moins un robot à axes multiples (17, 17').

8. Installation d'usinage selon au moins une des revendications précédentes,
**caractérisée**
**en ce que** ledit au moins un dispositif de déplacement (18) peut être bloqué dans la position de transport et/ou dans la position de travail.

9. Installation d'usinage selon au moins une des revendications précédentes,
**caractérisée**
**en ce qu'un** magasin d'outils (22) est agencé dans l'enceinte (10).

10. Installation d'usinage selon au moins une des revendications précédentes,
**caractérisée**
**par** une unité de fourniture de glace carbonique (38) pour traiter des surfaces.

11. Installation d'usinage selon au moins une des revendications précédentes,
**caractérisée**
**par** un générateur d'énergie (26) et/ou un accumulateur d'énergie (27).

12. Installation d'usinage selon au moins une des revendications précédentes,
**caractérisée**
**par** au moins un capteur (31, 32) pour commander ledit au moins un robot à axes multiples (17, 17') et/ou surveiller l'espace de travail (A).

13. Installation d'usinage selon au moins une des revendications précédentes,
**caractérisée**
**par** une unité de commande (24) pour commander ledit au moins un robot à axes multiples (17, 17').

14. Installation d'usinage selon au moins une des revendications précédentes,
**caractérisée**
**par** au moins un élément de protection (35) pour protéger contre des influences de l'environnement et/ou pour délimiter l'espace de travail (A).

15. Installation d'usinage selon au moins une des revendications précédentes,
**caractérisée**
**par** un premier robot à axes multiples (17) et un second robot à axes multiples (17') pour le soudage par rechargement et/ou le soudage d'assemblage.

16. Dispositif d'usinage pour la réalisation de travaux de voie, comprenant :
- un bogie (4) et
- une installation d'usinage (3) selon au moins une des revendications 1 à 15 qui est agencée sur le bogie (4).

17. Procédé pour la réalisation de travaux de voie, comprenant les étapes consistant à :
- fournir une installation d'usinage (3) selon au moins une des revendications 1 à 15,
- transporter l'installation d'usinage (3) jusqu'à un emplacement de voie à usiner, dans lequel ledit au moins un robot à axes multiples (17, 17') est dans la position de transport à l'intérieur de l'enceinte (10),
- transférer ledit au moins un robot à axes multiples (17, 17') de la position de transport à la position de travail à l'extérieur de l'enceinte (10) au moyen dudit au moins un dispositif de déplacement (18), et
- réaliser les travaux de voie au moyen dudit au moins un robot à axes multiples (17, 17').
